# EUROPEAN PATENT APPLICATION

(11) **EP 4 636 963 A1**
(43) Date of publication of application: **22.10.2025**
(21) Application number: 24170429.5
(22) Date of filing: 16.04.2024
(51) Int. Cl.: H02B 1/28, H02B 13/025

(54) **SWITCHGEAR**

(71) Applicant: ABB SCHWEIZ AG, 5400 Baden (CH)
(72) Inventor: ZLATNIK, Rostislav, 794 01 Ho tálkovy (CZ); RUMLER, David, 664 51 Kobylnice (CZ); KUNICKY, Ondrej, 696 81 Bzenec (CZ); DURCAK, Bohuslav, 02801 Trstená (SK); BAJANEK, Tomas, 684 01 Slavkov u Brna (CZ)
(74) Representative: Maiwald GmbH

(57) **Abstract**

The present invention relates to a switchgear, comprising:
- a cable compartment (10); and
- a front cover (20);
wherein the cable compartment comprises an opening;
wherein the front cover is configured to be connected to the cable compartment to cover and seal the opening; and
wherein when the front cover is connected to the cable compartment the cable compartment is configured to withstand an internal overpressure associated with an arc in the cable compartment.

## Description

### FIELD OF THE INVENTION

The present invention relates to a switchgear.

### BACKGROUND OF THE INVENTION

The front parts of a cable compartment of a switchgear, such as a Gas Insulated swirhcgear (GIS) are designed only for opened floor cable connection applications..

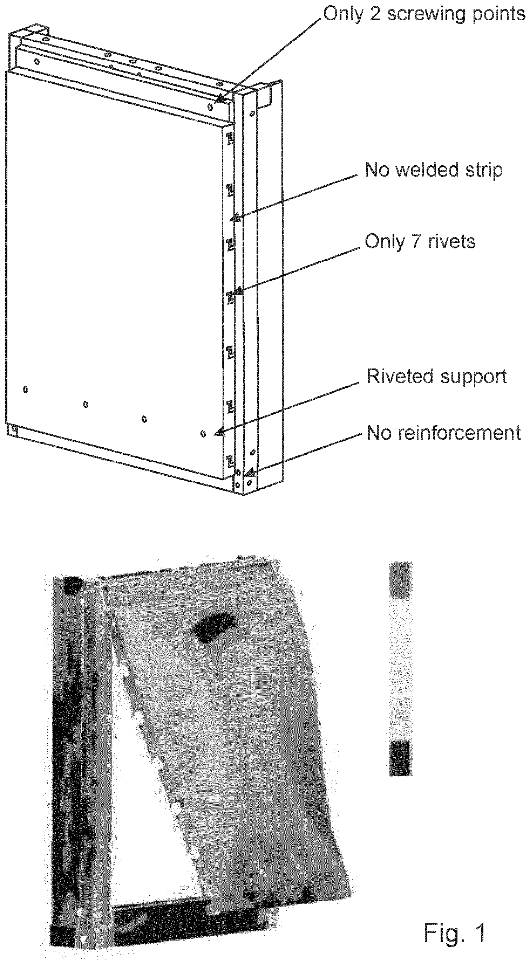

An example of an original, state of the art, design of a front cover of a cable compartment of a switchgear that can only operate in open floor applications is shown in Fig. 1, and where in the bottom image of Fig. 1 the front cover is shown as not having the integrity to withstand an internal overpressure.

The cable compartment can only operate in open floor applications, where there is no high overpressure requirement, and consequently the design does not need to be particularly robust. This is highlighted in second image of Fig. 1 that shows that an internal overpressure has resulted in the front cover being ripped open.

Thus, such a cable compartment design is not always ideal.

There is a need to address this situation.

### SUMMARY OF THE INVENTION

Therefore, it would be advantageous to provide a switchgear having a cable compartment that can operate in closed floor cable conenction applications.

The object of the present invention is solved with the subject matter of the independent claims, wherein further embodiments are incorporated in the dependent claims.

In a first aspect, there is provided a switchgear, comprising:
- a cable compartment; and
- a front cover.
The cable compartment comprises an opening. The front cover is configured to be connected to the cable compartment to cover and seal the opening. When the front cover is connected to the cable compartment the cable compartment is configured to withstand an internal overpressure associated with an arc in the cable compartment.

Thus, normally cable compartments with associated front covers are designed for open floor applications, but a new design of cable compartment with a front cover is designed for closed floor applications.

In an example, when the front cover is connected to the cable compartment the cable compartment is configured to withstand an internal overpressure of 2 bar.

In an example, the front cover comprises a plurality of edge portions and a panel portion extending between the plurality of edge portions, and the plurality of edge portions are configured to be connected to the cable compartment.

In an example, when the front cover is connected to the cable compartment the panel portion is configured to deform due to an internal overpressure within the cable compartment.

In an example, the centre of the panel portion is not reinforced.

Thus, the front cover can deform to a limited amount, thereby absorbing the additional energy resulting from an internal arc.

In an example, a first edge portion of the plurality of edge portions comprises an outer strip extending along a side of the front cover and the outer strip is at an angle of 90 degrees to the panel portion.

In an example, the outer strip comprises a section formed from the same sheet as the panel portion bent through an angle of 90 degrees.

In an example, the outer strip comprises two layers welded together.

In an example, the outer strip comprises an additional section welded to the section formed from the same sheet as the panel portion bent through an angle of 90 degrees.

In an example, the first edge portion is configured to be rivetted to the cable compartment.

In an example, the first edge portion is configured to be rivetted to the cable compartment via 10 rivets.

In an example, the first edge portion is configured to be rivetted to the cable compartment via rivets that are non-linearly spaced from one another.

It has been found that a non-linear pattern of rivets on the sides allow for an increased density of rivets where they are needed, thus providing for the required strength with the minimum thereby saving constructions costs.

In an example, the first edge portion is part of the same sheet as the panel portion that is bent or is a separate part welded to the panel portion.

In an example, a second edge portion of the plurality of edge portions comprises an outer strip extending along a side of the front cover and the outer strip is at an angle of 90 degrees to the panel portion. The second edge portion is located at the opposite side of the front cover to the first edge portion.

Thus, the first edge portion and the second edge portion can be the same, and mirror images of each other and on opposite sides of the front cover.

In an example, the outer strip comprises a section formed from the same sheet as the panel portion bent through an angle of 90 degrees.

In an example, the outer strip comprises two layers welded together.

In an example, the outer strip comprises an additional section welded to the section formed from the same sheet as the panel portion bent through an angle of 90 degrees.

In an example, the second edge portion is configured to be rivetted to the cable compartment.

In an example, the second edge portion is configured to be rivetted to the cable compartment via 10 rivets.

In an example, the second edge portion is configured to be rivetted to the cable compartment via rivets that are non-linearly spaced from one another.

In an example, the second edge portion is part of the same sheet as the panel portion that is bent or is a separate part welded to the panel portion.

In an example, a third edge portion of the plurality of edge portions comprises an end section configured to be bolted or screwed to the cable compartment. The third edge portion comprises a support section, the support section comprises a first part, and a first end of the first part is connected to the panel portion and is substantially perpendicular to the panel portion. The support section also comprises a second part at a distal end of the first part to the first end of the first part and the second part is substantially parallel to the panel portion. A first surface of the second part faces towards the panel portion. The cable compartment at the opening comprises a block piece, and a first surface of the block piece faces away from the opening. When the front cover is connected to the cable compartment the first surface of the second part is located adjacent to the first surface of the block piece.

In an example, the end section of the third edge portion comprises a bent portion. A first part of the bent portion is oriented substantially perpendicular to the panel portion and a second part of bent portion at the end of the bent portion is orientated substantially parallel to the panel portion. When the front cover is connected to the cable compartment the second part of the bent portion is in contact with the cable compartment.

In an example, the second part of the bent portion has a plurality of holes and the panel portion has a corresponding first plurality of holes. Screws or bolts are configured to go through the first plurality of holes in the panel portion and the corresponding plurality of holes in the second part of the bent section to connect the end section of the third edge portion to the cable compartment.

In an example, the third edge portion is configured to be connected to the cable compartment via three screws or bolts.

In an example, the third edge portion is part of the same sheet as the panel portion that is bent or is a separate part welded to the panel portion.

In an example, the cable compartment comprises a reinforcement section connected to the block piece and connected to one or two walls of the cable compartment.

Thus, a bottom edge of the front cover for example can be very securely held in position, where an inner lip (the bent portion) of the front cover sits over a block piece and the front cover cannot move away from the cable compartment because the front cover is restrained from moving via the inner lip, and where the integrity of the block piece itself can be ensured via a reinforcement section that helps to hold the block piece in position.

In an example, a fourth edge portion of the plurality of edge portions is configured to be screwed or bolted to the cable compartment.

In an example, an end section of the fourth edge portion comprises a bent portion. A first part of the bent portion is oriented substantially perpendicular to the panel portion and a second part of bent portion at the end of the bent portion is orientated substantially parallel to the panel portion. When the front cover is connected to the cable compartment the second part of the bent portion is in contact with the cable compartment.

In an example, the fourth edge portion is part of the same sheet as the panel portion that is bent or is a separate part welded to the panel portion.

### BRIEF DESCRIPTION OF THE DRAWINGS

Exemplary embodiments will be described in the following with reference to the following drawing:
Fig. 1 shows an example of an original, state of the art, design of a front cover of a cable compartment of a switchgear that can only operate in open floor applications;
Fig. 2 shows an example of the new front cover design and new cable compartment design; and
Fig. 3 shows an example of the new front cover design and new cable compartment design.

### DETAILED DESCRIPTION OF EMBODIMENTS

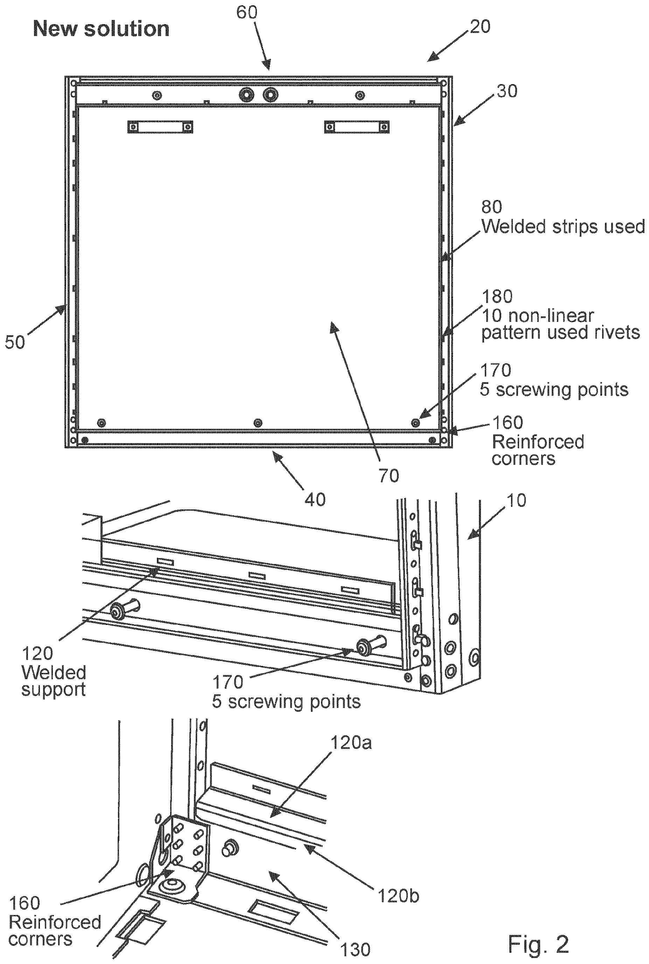

Figs. 2-3 relate to a new front cover design and new cable compartment design, where the cable compartment can be used in closed floor applications and can handle high overpressures caused by an internal arc event because the front cover can handle much higher stress than previous front covers. Also, the design of the front cover in the new design, and the design of the cable compartment at the opening in the new design, has been developed to ensure that the front cover is held securely in position.

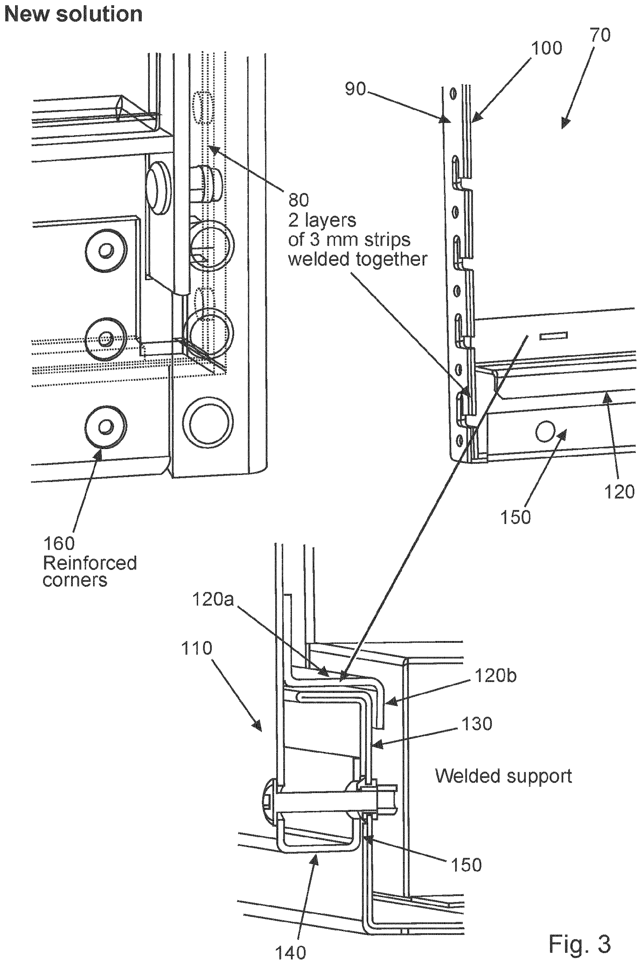

Figs. 2 and 3 show detailed embodiments.

Looking an Fig. 2 The cable compartment 10 is shown in the bottom two images, and the front cover 20 is shown in the top image, where the front cover 20 is attached to the cable compartment 10. The front cover 20 is viewed from the front, and has two edge portions 30 and 50 on the sides and an edge portion 60 at the top and an edge portion 40 at the bottom. In the bottom image the view is from inside the cable compartment 10 and the block piece 130 is shown at the bottom, riveted to the bottom wall of the cable compartment 10. A reinforcement section 160 is a bracket that is fixed to the side wall and bottom wall of the cable compartment and also fixed to the block piece, where there is another such arrangement at the other end of the block piece at the opposing side wall of the cable compartment. This arrangement ensures that the block piece 130 is very securely held in position. On the inside of the front cover 20 there is a support structure 120 that is an angle piece that fits over the block piece when the front cover is raised up inserted into the opening of the cable compartment and lowered. A part 120b of the support structure 120 then sits behind the block piece 130 and the bottom of the front cover can not then move forward out of the opening of the cable compartment. The bottom edge portion 40 of the front cover 20 is also screwed/bolted and riveted to the cable compartment, but the block piece 130 and support structure 120 arrangement provides for additional fixing security.

Looking at Fig. 3, the support structure 120 is clearly seen welded to the inner side of the front cover and the two side edge portions 30 and 50 have inner strips 80, formed from a bent piece or section 90 of the panel sheet 70 itself that has an additional sheet or section 100 that is welded to it - thus inner strips 80 and additional sheet or section 100 in effect form a single part. Securing of the front cover 20 to the cable compartment 10 then involves rivet connections between the outer strips 80 and the cable compartment, and the seams can also be welded. It has been found that the spacing between the rivets can be varied in order to provide a decreased distance between rivets to ensure integrity only where needed, and an overall number of rivets can be reduced providing for reduced time and cost of manufacture. Also as shown in Fig. 3 the bottom edge section 40 has an end portion 110 where the panel 70 has been bent 90 degrees to form a first section or first bent part 140 and bent again through 90 degrees to a second section or second bent part 150. The second bent part then butts up against the cable compartment and screws or bolts go through the panel 70 and the second bent part 150 and fix to the body of the cable compartment at screwing or bolting points 170.

The following relates to more general examples of the new cable compartment 10 and front cover 20.

In an example of the new design a switchgear, comprises:
- a cable compartment 10; and
- a front cover 20.
The cable compartment comprises an opening. The front cover is configured to be connected to the cable compartment to cover and seal the opening. When the front cover is connected to the cable compartment the cable compartment is configured to withstand an internal overpressure associated with an arc in the cable compartment.

Thus, normally cable compartments with associated front covers are designed for open floor applications, but a new design of cable compartment with a front cover is designed for closed floor applications.

In an example, when the front cover is connected to the cable compartment the cable compartment is configured to withstand an internal overpressure of 2 bar.

In an example, the front cover comprises a plurality of edge portions 30, 40, 50, 60 and a panel portion 70 extending between the plurality of edge portions, wherein the plurality of edge portions are configured to be connected to the cable compartment.

In an example, when the front cover is connected to the cable compartment the panel portion is configured to deform due to an internal overpressure within the cable compartment.

In an example, the centre of the panel portion is not reinforced.

Thus, the front cover can deform to a limited amount, thereby absorbing the additional energy resulting from an internal arc.

In an example, a first edge portion 30 of the plurality of edge portions comprises an outer strip 80 extending along a side of the front cover and the outer strip is at an angle of 90 degrees to the panel portion.

In an example, the outer strip comprises a section 90 formed from the same sheet as the panel portion bent through an angle of 90 degrees.

In an example, the outer strip comprises two layers welded together.

In an example, the outer strip comprises an additional section 100 welded to the section 90 formed from the same sheet as the panel portion bent through an angle of 90 degrees.

In an example, the first edge portion is configured to be rivetted to the cable compartment.

In an example, the first edge portion is configured to be rivetted to the cable compartment via 10 rivets.

In an example, the first edge portion is configured to be rivetted to the cable compartment via rivets that are non-linearly spaced from one another.

It has been found that a non-linear pattern of rivets on the sides allow for an increased density of rivets where they are needed, thus providing for the required strength with the minimum thereby saving constructions costs.

In an example, the first edge portion is part of the same sheet as the panel portion that is bent or is a separate part welded to the panel portion.

In an example, a second edge portion 50 of the plurality of edge portions comprises an outer strip extending along a side of the front cover and the outer strip is at an angle of 90 degrees to the panel portion. The second edge portion is located at the opposite side of the front cover to the first edge portion.

Thus, the first edge portion and the second edge portion can be the same, and mirror images of each other and on opposite sides of the front cover.

In an example, the outer strip comprises a section formed from the same sheet as the panel portion bent through an angle of 90 degrees.

In an example, the outer strip comprises two layers welded together.

In an example, the outer strip comprises an additional section welded to the section formed from the same sheet as the panel portion bent through an angle of 90 degrees.

In an example, the second edge portion is configured to be rivetted to the cable compartment.

In an example, the second edge portion is configured to be rivetted to the cable compartment via 10 rivets.

In an example, the second edge portion is configured to be rivetted to the cable compartment via rivets that are non-linearly spaced 180 from one another.

In an example, the second edge portion is part of the same sheet as the panel portion that is bent or is a separate part welded to the panel portion.

In an example, a third edge portion 40 of the plurality of edge portions comprises an end section 110 configured to be bolted or screwed 170 to the cable compartment. The third edge portion comprises a support section 120, the support section comprises a first part 120a, and a first end of the first part is connected to the panel portion and is substantially perpendicular to the panel portion. The support section also comprises a second part 120b at a distal end of the first part to the first end of the first part and the second part is substantially parallel to the panel portion. A first surface of the second part faces towards the panel portion. The cable compartment at the opening comprises a block piece 130, and a first surface of the block piece faces away from the opening. When the front cover is connected to the cable compartment the first surface of the second part is located adjacent to the first surface of the block piece.

In an example, the end section of the third edge portion comprises a bent portion 140, 150. A first part 140 of the bent portion is oriented substantially perpendicular to the panel portion and a second part 150 of bent portion at the end of the bent portion is orientated substantially parallel to the panel portion. When the front cover is connected to the cable compartment the second part of the bent portion is in contact with the cable compartment.

In an example, the second part of the bent portion has a plurality of holes and the panel portion has a corresponding first plurality of holes. Screws or bolts are configured to go through the first plurality of holes in the panel portion and the corresponding plurality of holes in the second part of the bent section to connect the end section of the third edge portion to the cable compartment.

In an example, the third edge portion is configured to be connected to the cable compartment via three screws or bolts.

In an example, the third edge portion is part of the same sheet as the panel portion that is bent or is a separate part welded to the panel portion.

In an example, the cable compartment comprises a reinforcement section 160 connected to the block piece and connected to one or two walls of the cable compartment.

Thus, a bottom edge of the front cover for example can be very securely held in position, where an inner lip (the bent portion) of the front cover sits over a block piece and the front cover cannot move away from the cable compartment because the front cover is restrained from moving via the inner lip, and where the integrity of the block piece itself can be ensured via a reinforcement section that helps to hold the block piece in position.

In an example, a fourth edge portion 60 of the plurality of edge portions is configured to be screwed or bolted to the cable compartment.

In an example, an end section of the fourth edge portion comprises a bent portion. A first part of the bent portion is oriented substantially perpendicular to the panel portion and a second part of bent portion at the end of the bent portion is orientated substantially parallel to the panel portion. When the front cover is connected to the cable compartment the second part of the bent portion is in contact with the cable compartment.

In an example, the fourth edge portion is part of the same sheet as the panel portion that is bent or is a separate part welded to the panel portion.

Thus, as shown in Fig. 2-3, the front cover 20 has a panel portion 70, such as a sheet metal panel, such as steel, that could be 3mm thick. An edge portion 40 at the bottom of the front cover is formed by bending the sheet metal to form a section 140 at right angles to the panel portion and bent again to form another section 150 at right angles to this first section - thus back to being parallel to the panel portion 70 itself. As shown in the figures bolts or screws then go through this edge portion to connect it to the cable compartment. The cable compartment has a block piece 130 at the bottom of the compartment, and a reinforcement section 160, termed a reinforcement corner, attaches to the block piece and to the side and bottom walls of the cable compartment to ensure that the block piece is securely held. The front cover on the inside wall has a support section 120. That is a piece of metal sheet that is welded to the inside of the panel portion and bent to form a first part 120a that sits proud of or perpendicular to the surface and bent again to form a second part 120b that is again back to being parallel to the panel portion surface. The support section 120 forms a lip that sits over the block piece and means that the bottom of the front cover is securely held in place.

The top of the front cover can have a similar end portion with the panel portion bent twice to form an end with strength to be connected to the cable compartment. But this end does not have a support section or lip.

Thus, in effect the front cover is lifted up slightly, moved forwards until the support section 120 if over the block piece and then lowered and the top is tilted towards the cable compartment and the whole front cover is connected to the cable compartment.

As part of this connection, the sides of the front cover are bent inwards to form an outer strip 80, with a section 90 of the panel portion 70 bent at 90 degrees inwards. A second piece 100 is then welded to this bent part to strengthen it. Then the outer strip is riveted into place.

The top and bottom of the front cover are then screwed or bolted to the cable compartment.

Thus, previous Cable compartment were not meant to be used for closed floor applications, where closed floor causes much higher overpressure during internal arc events and thus much higher stress on the Front Cover. This has been addressed through the Front Cover having reinforced in such manner that it can withstand 2 bar overpressure.

The new Front Cover has spot and seam welded additional strips on the left and right side. New reinforcements in bottom corners of Cable compartment were also introduced providing for fixation between 3 different parts. A new non-linear pattern of rivets, such as Magna-Lok rivets, on the sides allows for an increased density of rivets only where needed, in cost effective way. Also the center of the Front Cover is not reinforced to allow limited deformation of the Front Cover to absorb additional energy from an internal arc.

### Reference Numerals

10 Cable compartment
20 Front cover
30 First edge portion of front cover
50 Second edge portion of front cover
40 Third edge portion of front cover
60 Fourth edge portion of front cover
70 Panel portion or sheet of front cover
80 Outer strips of first and second edge portions
90 Section of outer strip formed from a bent panel portion
100 additional section of outer strip welded to the section formed from the bent panel portion
110 End section of third edge portion of front cover
120 Support structure also termed welded support welded to inside of front cover
120a First part of support structure extending from and at 90 degrees to panel portion of front cover
120b second part of support structure at 90 degrees to first part support structure
130 Block piece also termed welded support located inside cable compartment at the opening welded to the bottom wall of the cable compartment
140 First part of third end section of third edge portion formed from panel portion bent 90 degrees
150 Second part of third end section of third edge portion formed from panel portion bent 90 degrees with respect to the first part of the third end section
160 Reinforcement section or reinforcement corner located inside cable compartment at the opening and connected to the bottom wall the side wall and the block piece
170 Screwing or bolting points

## Claims

1. A switchgear, comprising:
- a cable compartment (10); and
- a front cover (20);
wherein the cable compartment comprises an opening;
wherein the front cover is configured to be connected to the cable compartment to cover and seal the opening; and
wherein when the front cover is connected to the cable compartment the cable compartment is configured to withstand an internal overpressure associated with an arc in the cable compartment.

2. Switchgear according to claim 1, wherein when the front cover is connected to the cable compartment the cable compartment is configured to withstand an internal overpressure of 2 bar.

3. Switchgear according to any of claims 1-2, wherein the front cover comprises a plurality of edge portions (30, 40, 50, 60) and a panel portion (70) extending between the plurality of edge portions, wherein the plurality of edge portions are configured to be connected to the cable compartment.

4. Switchgear according to claim 3, wherein when the front cover is connected to the cable compartment the panel portion is configured to deform due to an internal overpressure within the cable compartment.

5. Switchgear according to any of claims 3-4, wherein a first edge portion (30) of the plurality of edge portions comprises an outer strip (80) extending along a side of the front cover and wherein the outer strip is at an angle of 90 degrees to the panel portion.

6. Switchgear according to claim 5, wherein the outer strip comprises a section (90) formed from the same sheet as the panel portion bent through an angle of 90 degrees.

7. Switchgear according to any of claims 5-6, wherein the outer strip comprises two layers welded together.

8. Switchgear according to claim 7 when dependent upon claim 6, wherein the outer strip comprises an additional section (100) welded to the section (90) formed from the same sheet as the panel portion bent through an angle of 90 degrees.

9. Switchgear according to any of claims 5-8, wherein the first edge portion is configured to be rivetted to the cable compartment.

10. Switchgear according to any of claims 3-9, wherein a second edge portion (50) of the plurality of edge portions comprises an outer strip extending along a side of the front cover and wherein the outer strip is at an angle of 90 degrees to the panel portion, and wherein the second edge portion is located at the opposite side of the front cover to the first edge portion.

11. Switchgear according to any of claims 3-10, wherein a third edge portion (40) of the plurality of edge portions comprises an end section (110) configured to be bolted or screwed (170) to the cable compartment, and wherein the third edge portion comprises a support section (120), wherein the support section comprises a first part (120a), wherein a first end of the first part is connected to the panel portion and is substantially perpendicular to the panel portion and wherein the support section comprises a second part (120b) at a distal end of the first part to the first end of the first part and wherein the second part is substantially parallel to the panel portion, wherein a first surface of the second part faces towards the panel portion; and wherein the cable compartment at the opening comprises a block piece (130), wherein a first surface of the block piece faces away from the opening, and wherein when the front cover is connected to the cable compartment the first surface of the second part is located adjacent to the first surface of the block piece.

12. Switchgear according to claim 11, wherein the end section of the third edge portion comprises a bent portion (140, 150), wherein a first part (140) of the bent portion is oriented substantially perpendicular to the panel portion and a second part (150) of bent portion at the end of the bent portion is orientated substantially parallel to the panel portion, and wherein when the front cover is connected to the cable compartment the second part of the bent portion is in contact with the cable compartment.

13. Switchgear according to claim 12, wherein the second part of the bent portion has a plurality of holes and the panel portion has a corresponding first plurality of holes, and wherein screws or bolts are configured to go through the first plurality of holes in the panel portion and the corresponding plurality of holes in the second part of the bent section to connect the end section of the third edge portion to the cable compartment.

14. Switchgear according to any of claims 11-12, wherein the cable compartment comprises a reinforcement section (160) connected to the block piece and connected to one or two walls of the cable compartment.

15. Switchgear according to any of claims 3-14, wherein a fourth edge portion (60) of the plurality of edge portions is configured to be screwed or bolted to the cable compartment.
